# EUROPEAN PATENT SPECIFICATION

(11) **EP 1 335 785 B1**
(45) Date of publication and mention of the grant of the patent: **14.09.2005**
(21) Application number: 01980656.1
(22) Date of filing: 30.10.2001
(51) Int. Cl.: B01D 29/03

(54) **FILTRATION APPARATUS**
FILTERVORRICHTUNG
APPAREIL DE FILTRATION

(30) Priority: 02.11.2000 GB 0026796
(43) Date of publication of application: 20.08.2003
(73) Proprietor: DEF Systems Limited, Herefordshire HR7 4TX (GB)
(72) Inventor: HARLE, Brian, Alfred, Droitwich, Worcestershire WR9 7SF (GB); HUGMAN, David, Woodward, Bromyard, Herefordshire HR7 4TX (GB)
(74) Representative: Jackson, Derek Charles
(86) International application number: PCT/GB2001/004805
(87) International publication number: WO 2002/036236

(56) References cited:
- AT-B- 394 995
- FR-A- 2 754 812
- US-A- 5 078 865
- US-A- 5 296 136

## Description

This invention relates to filtration apparatus such as may be used, for example, for filtering flowable material such as sewage or industrial effluent to remove (suspended) solid material therefrom.

Thus the filtration apparatus can be used for small rural installations, in urban situations (where it may be necessary or desirable to run a plurality of such apparatus in parallel), in industrial or commercial situations, or as a mobile apparatus, for example for removing solid material from septic tanks and returning the filtered liquid.

AT-B-394 995 describes an apparatus for separating off and compressing solids of a liquid/solid mixture. The apparatus has a moisture removing zone and a transport device which is coupled to a drive and has a receiving device for the solids separated off in the transport device. The transport device is formed by a screw conveyor which transports the solids against the action of gravity from a lower first level to a higher second level, the conveyor screw of which has a pitch which decreases in the direction of transport. A bottom region and an end wall of the transport housing holding the conveyor screw is formed as a screen. The end wall forms a part of a receiving chamber into which a waste water feed line opens. The transport device is disposed in a housing which seals odour-tightly, which housing is provided at its lowest point with an outlet which opens into a biological sewage treatment plant.

US-A-5 078 865 describes a device for the removal of particles and/or screenings from a liquid running in a laundry. A screen with openings in the shape of a cylinder jacket reaches into the laundry and is tilted upwards. The screen is partly immersed in the liquid, and a parallel haulage track for the material is provided. The track is located spaced from the screen, and has the form of a screw conveyor with a housing, a shaft and a conveyor helix. The conveyor helix moves alongside the screen and picks up the material and transports it upwards. The openings with their lengthwise direction are inclined relative to the axis of the cylindrical jacket-shaped screen so that they are situated approximately parallel to the effective direction of the total force exerted on the material by the conveyor helix.

US-A-5 296 136 describes an apparatus for separating liquids and solids comprising an initial separator for removing coarse solid material from a mixture of solids and liquids, a first screen for separating further solid material from the liquid and a first auger extending axially through the first cylindrical screen for removing the separated further solid material from the first cylindrical screen. A second screen receives the liquid from the first screen and separates fine particles from the liquid, and a compactor between the first and second screens compacts the solid material removed from the first screen by the first auger. A second auger is provided in the second screen for mixing and removing the compacted solid material and the separated fine particles.

There is known from FR-A-2 754 812 a filtration apparatus in the form of an inclined rotary auger which rotates over a trough formed of bars of trapezoidal cross-section. The apertures between the bars extend parallel to the axis of the auger. The auger has a variable pitch and incorporates a brush or other fixed seal on its edge to ensure close contact between the auger and the trough and to clean the inner surface of the trough. Drained sludge is removed from the apparatus at the upper end of the auger. However, the sludge still contains substantial amounts of liquid and is not well suited for further processing.

It is therefore an object of the present invention to provide a filtration apparatus which more effectively removes liquid from a flowable material to be filtered.

According to the present invention there is provided filtration apparatus comprising:
a first elongate container having a first auger extending within the container, the first auger being rotatable about an inclined axis so as to have a lower end and an upper end;
a stationary trough-shaped filter screen extending within the container in the axial direction of the first auger, the filter screen being shaped to be adjacent to a lower peripheral region of the first auger;
an inlet for a flowable material to be filtered, the inlet being provided at a level above the filter screen;
a first outlet for filtered liquid, the first outlet being at a level below the filter screen;
means for rotating the first auger so as to urge components of the flowable material along the filter screen from a lower end towards an upper end of the first auger;
a second outlet for solid material filtered out of the flowable material, the second outlet being located in the region of the upper end of the first auger; and
a second elongate container having a second auger closely fitting within the container, the second auger being rotatable about an inclined axis so as to have a lower end and an upper end, the second auger being adapted to receive at the lower end thereof the solid material from the second outlet of the first container, to compact the solid material and to discharge the compacted solid material from the upper end thereof,
wherein a predetermined number of flights of the first auger extending from the lower end thereof is formed with apertures.

The pitch of the second auger may decrease from the lower end towards the upper end thereof so as to compact the solid material.

Additionally or alternatively, the diameter of the second auger may decrease from the lower end towards the upper end thereof so as to compact the solid material.

The axis of the first and/or second augers may be inclined at an angle in the range of from 5 to 10 degrees to the horizontal.

The first container may have an upper surface which is removable at least in part. The upper surface may be provided with one or more viewing ports.

The first container may have one or more closeable access ports along at least one side thereof.

The filter screen may be generally semi-cylindrical.

The filter screen may be supported from below.

The filter screen may be perforated, the dimensions of the perforations being in the range from 0.1 to 1.0 mm.

The first auger may be unsupported between the ends thereof.

The outer leading face of the flights of the auger may be provided with seal means, such as an elastomeric seal or brush, for engaging with the filter screen. The seal means may be adjustable.

The apertures in each flight may comprise four holes spaced around the circumference of the flight.

The first auger may be of substantially continuous pitch. However, the final flight at the upper end of the first auger may have a reduced pitch to initiate compaction of the solid material.

The first and/or second augers may be rotatable at a speed in the range from 0.1 to 5 rpm, preferably 1 to 2 rpm. The first and/or second augers may be rotatable intermittently.

A level controller may be provided to regulate rotation of the first auger.

The second elongate container may be conical at least in part.

The second auger may be integral with the first auger.

Means may be provided for applying ultrasonic vibrations to the material within the second container.

The second container may taper beyond the extent of the second auger. The tapering portion may be substantially upright with the smaller portion above the larger portion. An upright duct downstream of the tapering portion may be perforated.

The apparatus may incorporate means for heat treating and/or sterilising the solid material. The heat treating and/or sterilising means may comprise microwave apparatus and/or steam heating apparatus and/or induction heating apparatus.

For a better understanding of the present invention and to show more clearly how it may be carried into effect reference will now be made, by way of example, to the accompanying drawings in which:
Figure 1 is a schematic sectional illustration of one embodiment of a filtration apparatus according to the present invention;
Figure 2 is a section taken along the line A-A in Figure 1;
Figure 3 is a section taken along the line B-B in Figure 1; and
Figure 4 illustrates the manner in which solid material is moved through part of the filtration apparatus.

The figures show a filtration apparatus which comprises an elongate inclined chamber 1 of generally rectangular cross-section. The chamber may be inclined at an angle of 5 to 10 degrees to the horizontal to allow water within the chamber to flow towards the lower end under the influence of gravity. The chamber may have a length, for example, of about 3m. At least a part of the upper surface of the chamber 1 may be removable, for example to facilitate servicing the components contained therein, and may be provided with one or more viewing ports. Closeable access ports may be provided along one or both sides of the chamber to facilitate servicing, ideally in the region of the lower portion of the side. The chamber 1 is supported on a suitable framework (not shown) to facilitate access beneath the chamber for installation and servicing.

The chamber 1 may be made of any suitable material such as glass reinforced plastics or stainless steel, or mild steel or cast iron which is coated to resist corrosion.

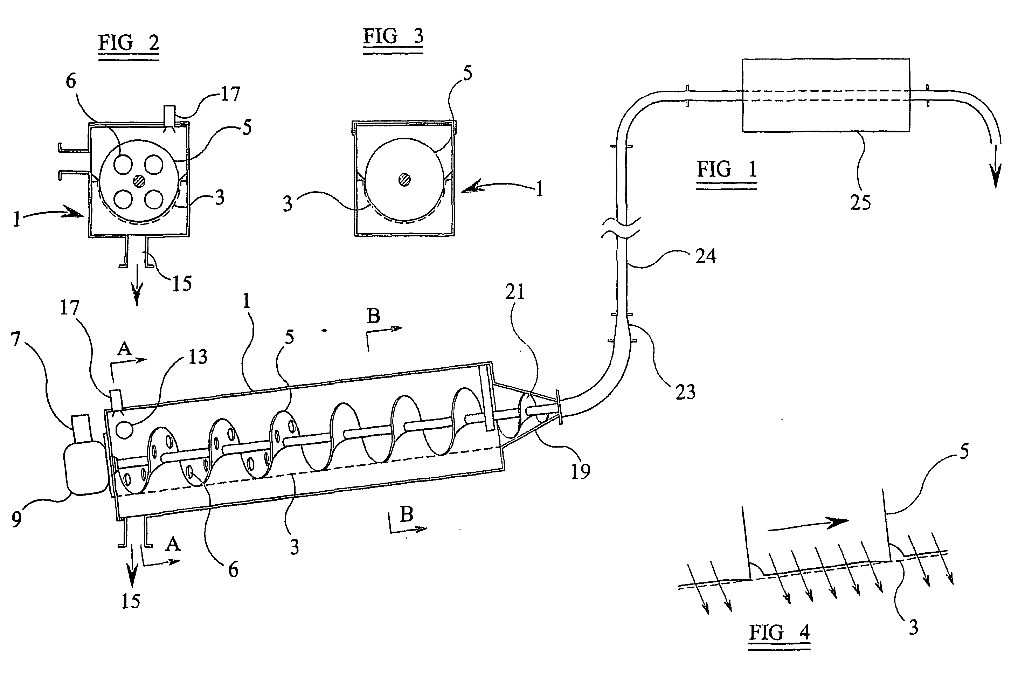

Extending within the chamber 1 in the longitudinal direction thereof is a stationary trough-like filter screen 3 which is generally semi-cylindrical. As can be seen from Figures 2 and 3 the filter screen 3 is generally U-shaped in a sectional plane transverse to the longitudinal direction of the chamber 1, that is with the central region of the screen below the edge regions thereof. The filter screen is secured to the internal surfaces of the sides of the chamber 1 in a manner such that water cannot pass between the edges of the filter screen 3 and the chamber 1.

The filter screen 3 is in the form of a substantially smooth perforated plate, the dimensions of the perforations suitably being in the range from 0.1 to 1.0 mm (diameter or side length). The filter screen 3 may be made, for example, of perforated steel, such as stainless steel, or other suitable material which is resistant to aqueous corrosion, or may be made of rolled woven wire, for example of stainless steel or like material, which may be sintered.

The filter screen 3 should be sufficiently rigid to withstand the hydrostatic head of the apparatus with minimal distortion and/or deflection. To this end the filter screen is generally supported from below.

Rotatably mounted within the chamber 1 and extending in the longitudinal direction thereof is an auger 5, or helical screw, which may have a nominal diameter of about 600 mm. The auger is inclined at a similar angle as the chamber 1. The auger 5 is generally unsupported between the ends thereof, but for long augers, such as 5 m or more, one or more intermediate bearings may be provided. The auger 5 may be made of any suitable material such as glass reinforced plastics or stainless steel, or mild steel or cast iron which is coated to resist corrosion.

The diameter of the auger 5 is designed to substantially match the curvature of the filter screen 3 such that the periphery of the auger lies closely adjacent to the screen. To improve the seal between the auger and the screen, the outer leading face of the flights of the auger are provided with an adjustable seal means, such as an elastomeric seal, for example of rubber or neoprene, or brush (neither shown), such that in use the seal sweeps the face of the screen 3. A predetermined number of flights of the auger 5 extending from the lower end of the chamber 1, for example four flights, is formed with apertures 6 to allow liquid levels to balance at the lower end of the auger 5.

For example, in the illustrated embodiment the apertures 6 may comprise four holes of about 100 mm diameter in each of the predetermined number of flights. The auger is of substantially continuous pitch, for example about 90 percent of the nominal diameter thereof, within the chamber 1. However, the final flight of the auger may be about 50 percent of the nominal diameter in order to initiate compaction of the solid material removed from the sewage or the like by the auger as will be discussed in more detail hereinafter.

The auger is rotatable by means of a motor 7 and reduction gearing 9 provided externally at the lower end of the chamber 1. The motor may have a normal operating speed of about 1440 rpm, but this is reduced by the gearing 9 to about 0.1 to 5 rpm, preferably 1 to 2 rpm for an auger of 600 mm diameter, with a corresponding increase in torque. The auger may be rotated intermittently if desired.

An inlet 13 for flowable material in the form of raw sewage, industrial effluent or the like is provided in the region of an upper portion of the lower end of the chamber 1 (but ideally not in the end face itself) at a level above the filter screen 3 and an outlet 15 for filtered liquid such as water is provided in the region of a lower portion of the lower end of the chamber 1 (again ideally not in the end face itself) at a level below the filter screen 3. A level controller 17 is provided within the lower end of the chamber 1 to regulate rotation of the auger 5. The level controller 17 may be secured for example to the (removable) upper surface of the chamber or to a side thereof.

At the upper end of the chamber 1 there is provided a conical chamber 19 the walls of which are not porous and within which is mounted, as an extension of the auger 5, a further auger 21 which is rotatable with the auger 5. The purpose of the further auger 21 is to compact and further dewater the solid material removed from the sewage or the like by the auger 5. If desired, ultrasonic vibrations may be employed to cause the solids to vibrate and thus to facilitate dewatering.

As illustrated, the further auger 21 fits closely within the conical chamber 19 and tapers from a nominal diameter of about 600 mm at the lower, entry, end thereof to a nominal diameter of about 200 mm at the upper, discharge, end thereof. The further auger 21 may taper over a length of about 1m. The pitch of the further auger may be about 40 percent of the nominal diameter at the inlet end, reducing to about 20 percent of the nominal diameter at the discharge end. The clearance between the auger 21 and the conical chamber 19 should be a small as practicable, for example in the range from 0.5 to 2 mm.

The chamber 19 may effectively continue beyond the upper end of the further auger 21 and may continue to taper, for example in an upwardly extending portion 23 thereof, to further compact the solid material. The diameter of the chamber 19 may reduce to about 100 mm.

The further auger may take a number of alternative forms (not shown). For example, the further auger may taper over a length of about 600 mm, at constant or reducing pitch, followed by a portion of constant diameter (such as 150 mm) but reducing pitch. The overall length may again be about 1m. In a further modification the auger may comprise a multiple helix open centre auger.

Downstream of the upwardly extending portion 23 is an upright duct 24 for conveying the compacted solid material. The lower end of the duct 24 may be perforated, the dimensions of the perforations being, for example, similar to or slightly larger than the dimensions of the perforations of the screen 3. Liquid removed from the solids may be returned to the inlet 13.

The duct 24 conveys the compacted and dewatered solid material to a means 25 for heat treating and/or sterilising the material. Suitable heat treating and/or sterilising apparatus 25 includes a microwave heater and/or a steam heating process and/or induction heating apparatus and/or a heated jacket, for example employing waste heat from other parts of a sewage treatment works or elsewhere. Alternatively, the compacted and dewatered material may be transported to a central location for suitable heat treatment or sterilisation.

In use of the filtration apparatus shown in the drawings, sewage or the like enters the chamber 1 though the inlet 13 and filters through the lower portion of the filter screen 3. Initially the auger 5 is stationary.

As the sewage filters through the screen 3, solids (including fibres) are left on the screen and form a filter mat which in turn improves the filtration operation. When the filter mat reduces the hydraulic efficiency of the filter screen 3 to a point where the liquid rises to a predetermined level (such as half way up the lower end face), the level controller 17 is actuated to cause the auger 5 to rotate.

The action of the auger 5 is not to compress the solids, but merely slowly to push the solids up the inclined slope of the filter screen away from the "wet zone" at the lower end of the filter screen 3 towards a "dry zone" at the upper end of the screen. The slow rotation rate minimises disturbance of the solids.

The apertures 6 in the auger allow inflowing sewage to utilise the full length of the wet zone.

After passing through the "dry zone" at the upper end of the screen 3, where any surplus water can drain away, the solids enter the conical chamber 19 and auger 21 where the sludge is compressed by the auger 21 and extruded into the upwardly extending tapering portion 23 where the weight of solid material provides a final dewatering effect.

Thus, the filtering is effected solely by gravity, with the auger 5 gently wiping the solids up the sloping filter screen 3. In this way any solid particles, including grit and stones (for example up to 75 mm diameter), will pass through the apparatus without damaging the filter screen 3 because the solids are gently pushed along the screen and are not pushed against the screen. The slow turning of the auger 5 has the effect of gently cleaning the filter screen 3, thereby allowing a greater hydraulic flow through the screen and a corresponding reduction in the liquid level above the screen.

If desired, as an alternative to continuous rotation, the auger 5 may rotate intermittently. For example, it may make some 3 or 4 revolutions and may then stop to allow solids in the "dry zone" to dewater naturally under gravity.

If desired, the filtration apparatus may be mounted on a road trailer or the like in order that the apparatus can readily be moved from one site to another.

The dimensions of the apparatus can vary from those described hereinabove. For example, the auger could have a diameter in the range from 300 mm to 2.5 m and the length thereof may be in the range from 1.5 to 12 m or more.

The filtration apparatus according to the present invention can be used to replace or supplement conventional detritus channels, primary and secondary sedimentation tanks and/or sewage sludge processing equipment. The filtration apparatus can significantly reduce the overall size of a sewage treatment works while simultaneously reducing the environmental impact of such works. Use of the apparatus is not restricted to sewage treatment works, and it can also be used, for example, at junctions between sewage mains to remove solids and to reduce the load at the sewage works downstream and/or at sewage pumping stations to remove solids and thereby to permit more efficient pumping.

## Claims

1. Filtration apparatus comprising:
a first elongate container (1) having a first auger (5) extending within the container, the first auger being rotatable about an inclined axis so as to have a lower end and an upper end;
a stationary trough-shaped filter screen (3) extending within the container (1) in the axial direction of the first auger (5), the filter screen being shaped to be adjacent to a lower peripheral region of the first auger;
an inlet (13) for a flowable material to be filtered, the inlet being provided at a level above the filter screen (3);
a first outlet (15) for filtered liquid, the first outlet being at a level below the filter screen (3);
means (7, 9) for rotating the first auger (5) so as to urge components of the flowable material along the filter screen (3) from a lower end towards an upper end of the first auger;
a second outlet for solid material filtered out of the flowable material, the second outlet being located in the region of the upper end of the first auger (5); and
a second elongate container (19) having a second auger (21) closely fitting within the container, the second auger being rotatable about an inclined axis so as to have a lower end and an upper end, the second auger being adapted to receive at the lower end thereof the solid material from the second outlet of the first container (1), to compact the solid material and to discharge the compacted solid material from the upper end thereof,
**characterised in that** a predetermined number of flights of the first auger (5) extending from the lower end thereof is formed with apertures (6).

2. Filtration apparatus as claimed in claim 1, **characterised in that** the pitch of the second auger (21) decreases from the lower end towards the upper end thereof so as to compact the solid material.

3. Filtration apparatus as claimed in claim 1 or 2, **characterised in that** the diameter of the second auger (21) decreases from the lower end towards the upper end thereof so as to compact the solid material.

4. Filtration apparatus as claimed in any preceding claim, **characterised in that** the axis of the first and/or second augers (5, 21) is inclined at an angle in the range of from 5 to 10 degrees to the horizontal.

5. Filtration apparatus as claimed in any preceding claim, **characterised in that** the first container (1) has an upper surface which is removable at least in part, the upper surface being provided for example with one or more viewing ports.

6. Filtration apparatus as claimed in any preceding claim, **characterised in that** the first container (1) has one or more closeable access ports along at least one side thereof.

7. Filtration apparatus as claimed in any preceding claim, **characterised in that** the filter screen (3) is generally semi-cylindrical.

8. Filtration apparatus as claimed in any preceding claim, **characterised in that** the filter screen (3) is supported from below.

9. Filtration apparatus as claimed in any preceding claim, **characterised in that** the filter screen is perforated, the dimensions of the perforations being in the range from 0.1 to 1.0 mm.

10. Filtration apparatus as claimed in any preceding claim, **characterised in that** the first auger (5) is unsupported between the ends thereof.

11. Filtration apparatus as claimed in any preceding claim, **characterised in that** the outer leading face of the flights of the first auger (5) is provided with seal means for engaging with the filter screen (3), the seal means optionally being adjustable, and being selected for example from an elastomeric seal and a brush.

12. Filtration apparatus as claimed in any preceding claim, **characterised in that** the apertures in each flight comprise four holes spaced around the circumference of the flight.

13. Filtration apparatus as claimed in any preceding claim, **characterised in that** the first auger (5) is of substantially continuous pitch.

14. Filtration apparatus as claimed in any one of claims 1 to 12, **characterised in that** the final flight at the upper end of the first auger (5) has a reduced pitch to initiate compaction of the solid material.

15. Filtration apparatus as claimed in any preceding claim, **characterised in that** the first and/or second augers (5, 21) is/are rotatable at a speed in the range from 0.1 to 5 rpm, preferably in the range from 1 to 2 rpm.

16. Filtration apparatus as claimed in any preceding claim, **characterised in that** the first and/or second augers (5, 21) is/are rotatable intermittently.

17. Filtration apparatus as claimed in any preceding claim, **characterised in that** a level controller (17) is provided to regulate rotation of the first auger (5).

18. Filtration apparatus as claimed in any preceding claim, **characterised in that** the second elongate container (19) is conical at least in part.

19. Filtration apparatus as claimed in any preceding claim, **characterised in that** the second auger (21) is integral with the first auger (5).

20. Filtration apparatus as claimed in any preceding claim and including means for applying ultrasonic vibrations to the material within the second container (19).

21. Filtration apparatus as claimed in any preceding claim, **characterised in that** the second container (19) tapers beyond the extent of the second auger (21), for example the tapering portion (23) being substantially upright with the smaller portion above the larger portion.

22. Filtration apparatus as claimed in claim 21, **characterised in that** an upright duct (24) downstream of the tapering portion (23) is perforated.

23. Filtration apparatus as claimed in any preceding claim and including means (25) for heat treating and/or sterilising the solid material, the heat treating and/or sterilising means being selected from, for example, microwave apparatus and/or steam heating apparatus and/or induction heating apparatus.

## Patentansprüche

1. Filtriervorrichtung, die Folgendes umfasst:
einen ersten länglichen Behälter (1) mit einer in dem Behälter verlaufenden ersten Förderschnecke (5), die um eine schräge Achse gedreht werden kann, so dass sie ein unteres und ein oberes Ende aufweist,
ein feststehendes, wannenförmiges Filtersieb (3), das in axialer Richtung der ersten Förderschnecke (5) in dem Behälter (1) verläuft und so geformt ist, dass es an einen unteren Umfangsbereich der ersten Förderschnecke angrenzt,
einen Einlass (13) für ein zu filterndes fließfähiges Material, der in einer Höhe oberhalb des Filtersiebes (3) vorgesehen ist,
einen ersten Auslass (15) für gefilterte Flüssigkeit, der sich auf einer Höhe unterhalb des Filtersiebes (3) befindet,
Mittel (7, 9) für das Drehen der ersten Förderschnecke (5), um die Bestandteile des fließfähigen Materials von einem unteren Ende zu einem oberen Ende der ersten Förderschnecke hin an dem Filtersieb (3) entlang zu treiben,
einen zweiten Auslass für festes Material, das aus dem fließfähigen Material herausgefiltert wurde, wobei sich der zweite Auslass in dem Bereich des oberen Endes der ersten Förderschnecke (5) befindet, und
einen zweiten länglichen Behälter (19) mit einer zweiten Förderschnecke (21), die in dem Behälter satt anliegt und
um eine schräge Achse gedreht werden kann, so dass sie ein unteres und ein oberes Ende aufweist, wobei die zweite Förderschnecke so ausgelegt ist, dass sie an ihrem unteren Ende das feste Material aus dem zweiten Auslass des ersten Behälters (1) aufnimmt, das feste Material verfestigt und das verfestigte feste Material aus seinem oberen Ende ausstößt,
**dadurch gekennzeichnet, dass** eine vorgegebene Anzahl von Schraubengängen der ersten Förderschnecke (5), die sich von deren unterem Ende aus erstrecken, mit Öffnungen (6) ausgebildet ist.

2. Filtriervorrichtung nach Anspruch 1, **dadurch gekennzeichnet, dass** die Steigung der zweiten Förderschnecke (21) von ihrem unteren Ende zu ihrem oberen Ende hin abnimmt, damit das feste Material verfestigt wird.

3. Filtriervorrichtung nach Anspruch 1 oder 2, **dadurch gekennzeichnet, dass** der Durchmesser der zweiten Förderschnecke (21) von ihrem unteren Ende zu ihrem oberen Ende hin abnimmt, damit das feste Material verfestigt wird.

4. Filtriervorrichtung nach einem der vorhergehenden Ansprüche, **dadurch gekennzeichnet, dass** die Achse der ersten und/oder der zweiten Förderschnecke (5, 21) in einem Winkel im Bereich von 5 bis 10 Grad zur Horizontalen geneigt ist.

5. Filtriervorrichtung nach einem der vorhergehenden Ansprüche, **dadurch gekennzeichnet, dass** der erste Behälter (1) eine obere Fläche aufweist, die zumindest zum Teil abnehmbar und zum Beispiel mit einer oder mehreren Beobachtungsöffnungen versehen ist.

6. Filtriervorrichtung nach einem der vorhergehenden Ansprüche, **dadurch gekennzeichnet, dass** der erste Behälter (1) an mindestens einer Seite entlang eine oder mehrere verschließbare Zugangsöffnungen aufweist.

7. Filtriervorrichtung nach einem der vorhergehenden Ansprüche, **dadurch gekennzeichnet, dass** das Filtersieb (3) allgemein halbzylindrisch ist.

8. Filtriervorrichtung nach einem der vorhergehenden Ansprüche, **dadurch gekennzeichnet, dass** das Filtersieb (3) von unten abgestützt wird.

9. Filtriervorrichtung nach einem der vorhergehenden Ansprüche, **dadurch gekennzeichnet, dass** das Filtersieb perforiert ist, wobei die Abmessungen der Perforationen im Bereich von 0,1 bis 1,0 mm liegen.

10. Filtriervorrichtung nach einem der vorhergehenden Ansprüche, **dadurch gekennzeichnet, dass** die erste Förderschnecke (5) zwischen ihren Enden nicht abgestützt wird.

11. Filtriervorrichtung nach einem der vorhergehenden Ansprüche, **dadurch gekennzeichnet, dass** die äußere Druckfläche der Schraubengänge der ersten Förderschnecke (5) mit Abdichtmitteln zum Eingreifen in das Filtersieb (3) versehen ist, wobei die Abdichtmittel wahlweise einstellbar sind und zum Beispiel unter einer elastomeren Abdichtung und einer Bürste ausgewählt werden.

12. Filtriervorrichtung nach einem der vorhergehenden Ansprüche, **dadurch gekennzeichnet, dass** die Öffnungen in jedem Schraubengang vier Löcher umfassen, die um den Umfang des Schraubenganges herum beabstandet angeordnet sind.

13. Filtriervorrichtung nach einem der vorhergehenden Ansprüche, **dadurch gekennzeichnet, dass** die erste Förderschnecke (5) eine im Wesentlichen kontinuierliche Steigung aufweist.

14. Filtriervorrichtung nach einem der Ansprüche 1 bis 12, **dadurch gekennzeichnet, dass** der letzte Schraubengang am oberen Ende der ersten Förderschnecke (5) eine geringere Steigung aufweist, damit mit dem Verfestigen des festen Materials begonnen wird.

15. Filtriervorrichtung nach einem der vorhergehenden Ansprüche, **dadurch gekennzeichnet, dass** die erste und/oder die zweite Förderschnecke (5, 21) mit einer Geschwindigkeit im Bereich von 0,1 bis 5 U/min, vorzugsweise im Bereich von 1 bis 2 U/min gedreht werden können/kann.

16. Filtriervorrichtung nach einem der vorhergehenden Ansprüche, **dadurch gekennzeichnet, dass** die erste und/oder die zweite Förderschnecke (5, 21) diskontinuierlich gedreht werden können/kann.

17. Filtriervorrichtung nach einem der vorhergehenden Ansprüche, **dadurch gekennzeichnet, dass** ein Füllstandsregler (17) für das Regeln der Rotation der ersten Förderschnecke (5) bereitgestellt wird.

18. Filtriervorrichtung nach einem der vorhergehenden Ansprüche, **dadurch gekennzeichnet, dass** der zweite längliche Behälter (19) zumindest zum Teil kegelförmig ist.

19. Filtriervorrichtung nach einem der vorhergehenden Ansprüche, **dadurch gekennzeichnet, dass** die zweite Förderschnecke (21) integral mit der ersten Förderschnecke (5) ausgebildet ist.

20. Filtriervorrichtung nach einem der vorhergehenden Ansprüche mit einem Mittel für das Anlegen von Ultraschallschwingungen an das Material in dem zweiten Behälter (19).

21. Filtriervorrichtung nach einem der vorhergehenden Ansprüche, **dadurch gekennzeichnet, dass** sich der zweite Behälter (19) über das Ausmaß der zweiten Förderschnecke (21) hinaus verjüngt, wobei der sich verjüngende Abschnitt (23) zum Beispiel im Wesentlichen vertikal verläuft und der kleinere Abschnitt sich über dem größeren Abschnitt befindet.

22. Filtriervorrichtung nach Anspruch 21, **dadurch gekennzeichnet, dass** ein nach dem sich verjüngenden Abschnitt (23) angeordneter vertikaler Kanal (24) perforiert ist.

23. Filtriervorrichtung nach einem der vorhergehenden Ansprüche mit einem Mittel (25) für das Wärmebehandeln und/oder Sterilisieren des festen Materials, das zum Beispiel unter einer Mikrowellenvorrichtung und/oder einer Dampfheizvorrichtung und/oder einer Induktionsheizvorrichtung ausgewählt ist.

## Revendications

1. Dispositif de filtration comprenant
un premier récipient de forme allongée (1) ayant une première vis sans fin (5) qui s'étend à l'intérieur du récipient, la première vis sans fin pouvant tourner autour d'un axe incliné, ayant ainsi une extrémité inférieure et une extrémité supérieure ;
un écran filtrant (3) stationnaire, en forme d'auge, qui s'étend à l'intérieur du récipient (1) dans la direction axiale de la première vis sans fin (5), l'écran filtrant étant conformé de sorte à être adjacent à une région périphérique inférieure de la première vis sans fin ;
un orifice d'admission (13) pour une matière apte à l'écoulement devant être filtrée, l'orifice d'admission étant prévu à un niveau supérieur à celui de l'écran de filtration (3) ;
un premier orifice de sortie (15) pour le liquide filtré, le premier orifice de sortie étant prévu à un niveau inférieur à celui de l'écran de filtration (3) ;
des moyens (7, 9) pour faire tourner la première vis sans fin (5) de sorte à pousser les éléments constitutifs de la matière apte à l'écoulement le long de l'écran de filtration (3) depuis une extrémité inférieure vers une extrémité supérieure de la première vis sans fin ;
un second orifice de sortie pour une matière solide extraite par filtration hors de la matière apte à l'écoulement, le second orifice de sortie étant situé dans la région de l'extrémité supérieure de la première vis sans fin (5) ; et
un second récipient de forme allongée (19) ayant une seconde vis sans fin (21) qui s'adapte étroitement à l'intérieur du récipient, la seconde vis sans fin pouvant tourner autour d'un axe incliné ayant ainsi une extrémité inférieure et une extrémité supérieure, la seconde vis sans fin étant adaptée pour recevoir, au niveau de son extrémité inférieure, la matière solide qui provient du second orifice de sortie du premier récipient (1), pour compacter la matière solide et décharger la matière solide ainsi compactée hors de son extrémité supérieure,
**caractérisé en ce qu'**un nombre prédéterminé de spires de la première vis sans fin (5) s'étendant depuis l'extrémité inférieure de celle-ci sont formées avec des ouvertures (6).

2. Dispositif de filtration selon la revendication 1, **caractérisé en ce que** le pas de la seconde vis sans fin (21) diminue depuis son extrémité inférieure vers son extrémité supérieure de sorte à compacter la matière solide.

3. Dispositif de filtration selon la revendication 1 ou la revendication 2, **caractérisé en ce que** le diamètre de la seconde vis sans fin (21) diminue depuis son extrémité inférieure vers son extrémité supérieure de sorte à compacter la matière solide.

4. Dispositif de filtration selon l'une quelconque des revendications précédentes, **caractérisé en ce que** l'axe de la première et/ou de la seconde vis sans fin (5, 21) est incliné selon un angle compris entre 5 et 10 degrés relativement à l'horizontale.

5. Dispositif de filtration selon l'une quelconque des revendications précédentes, **caractérisé en ce que** le premier récipient (1) a une surface supérieure qui est au moins partiellement amovible, la surface supérieure étant, par exemple, pourvue d'une ou plusieurs fenêtres.

6. Dispositif de filtration selon l'une quelconque des revendications précédentes, **caractérisé en ce que** le premier récipient (1) est pourvu d'une ou plusieurs fenêtres d'accès fermables le long d'au moins un de ses côtés.

7. Dispositif de filtration selon l'une quelconque des revendications précédentes, **catractérisé en ce que** l'écran de filtration (3) revêt une forme généralement semi-cylindrique.

8. Dispositif de filtration selon l'une quelconque des revendications précédentes, **caractérisé en ce que** l'écran filtrant (3) est supporté par dessous.

9. Dispositif de filtration selon l'une quelconque des revendications précédentes, **caractérisé en ce que** l'écran filtrant est perforé, les dimensions des perforations étant comprises dans la plage de 0,1 à 1,0 mm.

10. Dispositif de filtration selon l'une quelconque des revendications précédentes, **caractérisé en ce que** la première vis sans fin (5) n'est pas soutenue entre ses extrémités.

11. Dispositif de filtration selon l'une quelconque des revendications précédentes, **caractérisé en ce que** la face d'attaque extérieure des spires de la première vis sans fin (5) est pourvue de moyens d'étanchéité qui s'engagent avec l'écran filtrant (3), les moyens d'étanchéité étant optionnellement ajustables et étant choisis, par exemple, parmi un joint élastomère et une garniture en brosse.

12. Dispositif de filtration selon l'une quelconque des revendications précédentes, **caractérisé en ce que** les ouvertures prévues dans chaque spire consistent en quatre trous espacés sur la circonférence de la spire.

13. Dispositif de filtration selon l'une quelconque des revendications précédentes, **caractérisé en ce que** la première vis sans fin (5) présente un pas sensiblement continu.

14. Dispositif de filtration selon l'une quelconque des revendications 1 à 12, **caractérisé en ce que** la dernière spire, à l'extrémité supérieure de la première vis sans fin (5), a un pas réduit de sorte à amorcer la compaction de la matière solide.

15. Dispositif de filtration selon l'une quelconque des revendications précédentes, **caractérisé en ce que** la première et/ou la seconde vis sans fin (5, 21) peut/peuvent tourner à une vitesse comprise dans la plage de 0,1 à 5 tr/min, préférentiellement dans la plage de 1 à 2 tr/min.

16. Dispositif de filtration selon l'une quelconque des revendications précédentes, **caractérisé en ce que** la première et/ou la seconde vis sans fin (5, 21) peut/peuvent tourner de façon intermittente.

17. Dispositif de filtration selon l'une quelconque des revendications précédentes, **caractérisé en ce qu'**un contrôleur de niveau (17) est prévu pour réguler la rotation de la première vis sans fin (5).

18. Dispositif de filtration selon l'une quelconque des revendications précédentes, **caractérisé en ce que** le second récipient allongé (19) est au moins partiellement conique.

19. Dispositif de filtration selon l'une quelconque des revendications précédentes, **caractérisé en ce que** la seconde vis sans fin (21) fait partie intégrante de la première vis sans fin (5).

20. Dispositif de filtration selon l'une quelconque des revendications précédentes, et qui comprend des moyens d'application de vibrations ultrasonores à la matière contenue dans le second récipient (19).

21. Dispositif de filtration selon l'une quelconque des revendications précédentes, **caractérisé en ce que** le second récipient (19) s'amincit au-delà de l'étendue de la seconde vis sans fin (21), la partie conique (23) étant par exemple sensiblement verticale, avec la partie la plus petite au-dessus de la partie la plus grande.

22. Dispositif de filtration selon la revendication 21, **caractérisé en ce qu'**un conduit vertical (24) monté en aval de la partie conique (23) est perforé.

23. Dispositif de filtration selon l'une quelconque des revendications précédentes et qui comprend des moyens (25) de traitement thermique et/ou de stérilisation de la matière solide, les moyens de traitement thermique et/ou de stérilisation étant sélectionnés, par exemple, parmi un dispositif à micro-ondes et/ou un dispositif de chauffage à la vapeur et/ou un dispositif de chauffage par induction.
